**Europäisches Patentamt**

**European Patent Office**

**Office européen des brevets**

(19)

(11) Veröffentlichungsnummer: **0 060 427**
**B1**

(12) **EUROPÄISCHE PATENTSCHRIFT**

(45) Veröffentlichungstag der Patentschrift:
12.08.87

(51) Int. Cl.⁴: **G 01 K 7/22,** G 01 K 13/00

(21) Anmeldenummer: **82101524.5**

(22) Anmeldetag: **01.03.82**

(54) **Sensor zur Messung physikalischer Grössen sowie Verfahren zu seiner Herstellung und seine Verwendung.**

(30) Priorität: **16.03.81 DE 3110047**
**18.05.81 DE 3119750**

(43) Veröffentlichungstag der Anmeldung:
**22.09.82 Patentblatt 82/38**

(45) Bekanntmachung des Hinweises auf die Patenterteilung:
**12.08.87 Patentblatt 87/33**

(84) Benannte Vertragsstaaten:
**AT BE CH DE FR GB IT LI NL SE**

(56) Entgegenhaltungen:
**EP-A-0 016 263**
**EP-A-0 028 387**
**US-A-3 406 366**
**US-A-3 881 181**
**US-A-4 085 398**

**EXTENTED ABSTRACTS, Band 80-1, Mai 1980,
Seiten 491-493, Princeton, USA, C. SIMSON:
"Properties of polycrystalline silicon IC resistors"
REVIEW OF SCIENTIFIC INSTRUMENTS, Band 40,
Nr. 9, September 1969, Seiten 1169-1172, New York,
USA, B.W. KENNEDY: "Thin film temperature
sensor"
REVIEW OF SCIENTIFIC INSTRUMENTS, Band 50,
Nr. 9, September 1979, Seiten 1084-1088, American
Institute of Physics, New York, USA, K. WASA et
al.: "Highly reliable temperature sensor using rf-**

(73) Patentinhaber: **Schaumburg, Hanno, Prof. Dr.- Ing.,
Dörpsweg 47, D-2000 Hamburg 54 (DE)**

(72) Erfinder: **Schaumburg, Hanno, Prof. Dr.- Ing.,
Dörpsweg 47, D-2000 Hamburg 54 (DE)**

(74) Vertreter: **Dickel, Klaus, Dipl.- Ing., Julius- Kreis-
Strasse 33, D-8000 München 60 (DE)**

(56) Entgegenhaltungen: (Fortsetzung)
**sputtered SiC thin film"
Funkschau, Heft 14, 1978, Sonderdruck, Seiten 89-92**

LIBER, STOCKHOLM 1987

## Beschreibung

Die Erfindung betrifft einen Sensor zur Messung physikalischer Größen, die die elektrischen Eigenschaften von Silizium verändern, wobei sich auf einem schlechtleitenden ebenen Substrat ein geometrisch vorbestimmter Bereich aus polykristallinem Halbleitermaterial befindet, der mit nach außen abgeführten Leiterbahnen in Kontakt steht.

Ein solcher Sensor ist im wesentlichen aus Review of Scientific Instruments, Band 50, Nr. 9, September 1979, Seiten 1084-1088, American Institute of Physics, New York, USA, K.Wasa et al.: "Highly reliable temperature sensor using rfsputtered SiC thin film" bekannt. In dieser Veröffentlichung wird ein Dünnfilmsensor aus dem Material SiC beschrieben, der auf einem isolierenden Substrat aufgebracht worden ist. Hierbei sind jedoch beide Anschlußkontakte auf der Seite des Dünnfilmsensors aufgebracht, was zu mehreren Nachteilen führt. Einerseits kann wegen der räumlichen Nähe von Kontaktgebiet und Dünnfilmsensor der Sensor nicht nahe an das Objekt herangebracht werden, weil er sonst möglicherweise die Kontakte beschädigen kann. Andererseits nimmt ein solcher Sensor eine große Fläche ein, weshalb er nur mit hohen Fertigungskosten hergestellt werden kann. In diesem Fall wird nämlich die Fläche beider Kontaktierungen zusätzlich zur Fläche des Sensors benötigt. Die Herstellung solcher Sensoren erfolgt üblicherweise auf einer Scheibe mit vorgegebener Fläche. Die Anzahl der pro Scheibe herstellbaren Sensoren bestimmt daher die Fertigungskosten. Aus diesem Grunde ist die Verwendung minimaler Sensorflächen von Bedeutung.

Aus Extended Abstracts, Band 80-1, Mai 1980, Seiten 491-493, Princeton, USA, C. Simson: "Properties of polycrystalline silicon IC resistors" ist bekannt, daß polykristalline Siliziumschichten einen teilweise linearen Strom-Spannungsverlauf haben. Gleichzeitig haben sie einen Temperaturkoeffizienten, der von den Herstellungsbedingungen abhängt. Über die Kontaktierung eines Polysilizium-Sensors zur Herstellung eines die Kontaktgebiete nicht gefährdenden und preisgünstigen Aufbaues findet sich jedoch keinerlei Aussage.

Aus Funkschau, Heft 14, 1978, Sonderdruck Seiten 89-92, Josef Schürmann: "Sensoren für die Automobil-Elektronik" ist bekannt, daß sich bei Verwendung monokristallinen Siliziums nach dem spreading-resistance-Prinzip Temperatursensoren herstellen lassen. Solche Sensoren beruhen jedoch auf der Temperaturabhängigkeit eines größeren Siliziumvolumens. Es handelt sich nicht um ein Dünnschichtbauelement, das von der Oberfläche her leicht zugänglich ist und eine entsprechend kurze Reaktionszeit besitzt.

In Kenntnis dieses Standes der Technik liegt der Erfindung die Aufgabe zugrunde, einen Sensor herzustellen, der die folgenden Eigenschaften besitzt:

1. Es soll sich um einen gegen das Substrat elektrisch isolierten Oberflächen-Dünnschichtsensor handeln, der dicht an ein Meßobjekt herangeführt werden kann und eine kurze Ansprechzeit besitzt.

2. Die Kontaktgebiete des Sensors sollen möglichst weit von dem Sensorgebiet entfernt sein, damit die Kontakte während der Messung nicht beschädigt werden können.

3. Der Sensor soll eine möglichst kleine Fläche einnehmen, damit die Fertigungskosten möglichst niedrig gehalten werden können.

Gelöst wird diese Aufgabe gemäß Anspruch 1 dadurch, daß sich das Substrat als Schicht auf einem niederohmigen Trägersubstrat befindet, über welches der Rückseitenkontakt durch eine Öffnung in der Substratschicht hergestellt ist, während auf der aus $SiO_2$ bestehenden Substratschicht eine zweite $SiO_2$-Schicht aufgebracht ist, die die Sensormeßfigur überdeckt und eine Öffnung für den Vorderseitenkontakt aufweist und die Vorderseite ganzflächig oder teilweise metallisiert ist, wobei eine elektrische Verbindung der Metallisierung mit dem Vorderseitenkontakt über eine Öffnung in der Meßfigur überziehenden zweiten Schicht hergestellt ist, während die Rückseite des Trägersubstrats metallisiert ist.

Hinsichtlich bevorzugter Ausführungsformen wird auf die in den Unteransprüchen angegebenen Merkmale verwiesen.

Der planare Aufbau des Sensors auf dem ebenen Substrat ermöglicht eine, bei Verwendung von monokristallinem Silizium nur schwer realisierte Bauform, bei der kein Drahtbonden erforderlich ist. Hierdurch läßt sich ein leichter physischer Zugang zum Sensor erreichen d. h., der Sensor kann stets in unmittelbare Nähe des Gegenstandes oder der Umgebung gebracht werden, dessen oder deren physikalischer Zustand zu messen ist. Durch die unmittelbare Zugänglichkeit des Sensors läßt sich ein rasches Meßergebnis erzielen. Der wenig komplizierte und robuste Aufbau gewährleistet eine geringe mechanische Beeinflußbarkeit und somit eine hohe Lebensdauer.

Die Schichtdicke des polykristallinen Siliziums liegt vorzugsweise bei 0,5 μm, wobei bevorzugt der geometrisch vorbestimmte dotierte Bereich die Form einer van-der-Pauw-Figur besitzt. Durch die Verwendung von van-der-Pauw-Figuren als Meßfigur wird eine geringe Abhängigkeit des angezeigten Wertes von der geometrischen Form der Meßfigur gewährleistet. Die Fertigungsstreuungen gehen weniger stark ein als bei anderen Meßfiguren.

Zur Passivierung ist der Sensor mit einer Quarzschicht, einer Siliziumnitridschicht oder einem Schutzlack überzogen.

Die Enden der nach außen abgeführten Leiterbahnen am Rand des Substrats können galvanisch verdickt sein, so daß der Sensor durch Einstecken in einen Normstecker kontaktiert werden kann. Es können auch Kontaktleisten an die Leiterbahnen angelötet sein. Schließlich ist auch ein Golddrahtbonden an die Leiterbahnen möglich, sowie andere Formen der Bondierung (bonding).

Hierdurch ergibt sich eine drastische Reduzierung der von dem Sensor beanspruchten Fläche und dementsprechend auch ein kleines Sensorvolumen. Die Wärmekapazität wird in vorteilhafter Weise verkleinert, und ein mechanischer Einbau des Sensors ist auch bei ungünstigen räumlichen Verhältnissen möglich. Der erfindungsgemäße Sensor läßt sich wesentlich kostengünstiger herstellen, da wegen des geringeren Flächenbedarfs des einzelnen Sensors pro gefettigter Fläche eine größere Anzahl von Sensoren hergestellt werden kann.

Diese Ausbildung des Sensors ist bei beliebiger Sensormeßfigur möglich. So lassen sich etwa bei einer van-der-Pauw-Figur zwei Kontaktierungen von der Rückseite durchführen, womit die angestrebte Flächenreduzierung ermöglicht wird. Gemäß einer bevorzugten Ausführungsform ist jedoch die Meßfigur zweipolig ausgebildet. Dabei befindet sich das Substrat bevorzugt als Schicht auf einem niederohmigen Trägersubstrat, über welches der Rückseitenkontakt durch eine Öffnung in der Substratschicht hergestellt ist. Auf der aus SiO$_2$ bestehenden Substratschicht ist nach der bevorzugten Ausführungsform eine zweite SiO$_2$-Schicht aufgebracht, die die Sensormeßfigur überdeckt und eine Öffnung für den Vorderseitenkontakt aufweist.

Zweckmäßig ist die Vorderseite des Sensors ganzflächig metallisiert, zur Vermeidung von Kurzschlüssen kann die Metallisierung der Vorderseite auch strukturiert sein wobei eine elektrische Verbindung der Metallisierung mit dem Vorderseitenkontakt über eine Öffnung in der die Meßfigur überzienenden zweiten Schicht hergestellt ist, während die Rückseite des Trägersubstrats ebenfalls ganzflächig metallisiert ist. Dabei besteht die Metallisierung aus einer etwa 1,5 μm dicken Aluminiumschicht.

Infolge der zweipoligen Ausführung und der Kontaktierung des Vorder- bzw. Rückseitenkontaktes der Sensormeßfigur über die ganzflächige Metallisierung der Vorder- und Rückseite des Sensors läßt sich dieser am Installationsort in einer einfachen Weise zwischen zwei Klemmkontakten einstecken.

Das erfindungsgemäße Verfahren zur Herstellung des Sensors gemäß Anspruch 9 zeichnet sich dadurch aus, daß man ein niederohmiges Silizumsubstrat thermisch oxydiert, bis sich eine erste SiO$_2$-Schicht von etwa 1 μm Dicke aufgebaut hat, in diese erste SiO$_2$-Schicht eine Öffnung für den Rückseitenkontakt der Sensormeßfigur einbringt und auf dieser Schicht die Sensormeßfigur aus polykristallinem Silizium definiert, sowie eine Kontaktdotierung der Anschlußflächen für den Vorder- und Rückseitenkontakt vornimmt, worauf man die Vorderseite pyrolytisch mit einer zweiten SiO$_2$ Schicht von etwa 1 μm Dicke bedeckt und hierin eine Öffnung für den Vorderseitenkontakt einbringt, während man anschließend eine beiderseitige Metallisierung durchführt.

Das Aufbringen der polykristallinen Siliziumschicht auf der vorzugsweise aus Quarz oder oxydiertem Silizium bestehende Substrat erfolgt bevorzugt über das chemical-vapor-deposition-Verfahren, über Aufdampfen oder Aufsputtern. Mit Hilfe von bekannten lithographischen Verfahren werden Widerstands- oder van-der-Pauw-Figuren in dieser Schicht erzeugt, und zwar in der Weise, daß nur die Figuren auf dem Substrat erhalten bleiben, während die dazwischenliegenden Siliziumbereiche weggeätzt werden. Anschließend werden über einen Lithographie- und einen Dotierprozeß die Kontaktgebiete der Widerstands- oder van-der-Pauw-Figuren stark vordotiert (Schichtwiderstand $\leqslant 30\,\Omega$).

In die polykristalline Figur wird nun zunächst eine Dotierung mit einem typischen Schichtwiderstand von etwa $\geqslant 500\,\Omega$ eingebracht. Anschließend findet alternativ eine Wärmebehandlung in einem Diffusionsofen statt, wobei bevorzugt die Behandlungstemperatur zwischen etwa 900 und etwa 1100° C liegt, oder es erfolgt eine Bestrahlung mit einem Laser für eine Rekristallisation des polykristallinen Gefüges, wobei die Bestrahlungsbedingungen vom Lasertyp und dem Strahlungsaufbau abhängen. Andererseits kann auch die Bestrahlung mittels eines Elektronenstrahls erfolgen.

Die Einstellung vorgegebener Schichtwiderstände oder anderer physikalischer Parameter kann mittels einer Trimmapparatur erfolgen, bei welcher die Eigenschaften des polykristallinen Siliziums durch Laserbestrahlung geändert werden. Eine Kontrolle der Veränderung erfolgt über eine gleichzeitige Messung der elektrischen Eigenschaften und eine Regelelektronik. Hierzu bettet man vorzugsweise das Bauelement in ein System zur Erzeugung vorbestimmter Umgebungsbedingungen ein.

Die abführenden Leiterbahnen definiert man, indem man zunächst eine ganzflächige Metallschicht aufbringt und die Bahnen durch einen nachfolgenden Lithographie- und Ätzprozeß ausbildet. Bei der Metallschicht kann es sich um Aluminium mit einer Schichtdicke von etwa 1 μm handeln.

Die Aufbringung der Abdeckung für eine Passivierung kann auf verschiedene Weise erfolgen. So kann man einerseits den Sensor mit einer Quarz- oder Siliziumnitridschicht bedecken. Andererseits kann die Bedeckung mit einem Schutzlack durch Tauchlackierung erfolgen, oder durch ein Aufsprühen eines Schutzlackes.

Ein wichtiger Verwendungsbereich des Sensors liegt auf dem Gebiet der Temperaturmessung. Hierbei steht im besonderen die Messung der Temperatur des menschlichen oder tierischen Körpers im Vordergrund. Aus einleuchtenden Gründen werden an elektronische Körpertemperatur-Meßgeräte besonders hohe Anforderungen bezüglich der Meßgenauigkeit und Eichkonstanz gestellt. Diese Forderungen vermögen die heute bekannten elektronischen Meßfühler nur ungenügend zu erfüllen. So besitzen Thermoelemente ein zu kleines Meßsignal, woraus sich eine unzureichende Genauigkeit ergibt. NTC-Widerstände weisen eine zu hohe Fertigungsstreuung auf. Darüber hinaus zeigt sich ein starker Alterungseffekt, der sich im besonderen abwertend auf die Eichkonstanz auswirkt. Schließlich besitzen Siliziumtemperatursensoren nach dem spreading-resistance-Prinzip eine zu hohe Fertigungsstreuung sowie einen vergleichsweise voluminösen Aufbau. Hierdurch ergibt sich eine hohe Wärmekapazität und damit eine sehr lange Reaktionszeit.

Demgegenüber besitzt der erfindungsgemäße Sensor, im besonderen im Hinblick auf die Temperaturmessung, eine geringe Wärmekapazität, wodurch sich eine kurze Meßzeit ergibt. Durch die Verwendung von polykristallinem Silizium als Sensormaterial ist eine hohe Lebensdauerqualität und Eichkonstanz gewährleistet. Durch die erwähnte Einstelltechnik ermöglicht die Verwendung von polykristallinem Silizium die Einhaltung geringer Fertigungstoleranzen.

Weiterhin ist der Aufbau weitgehend unempfindlich, und die Metallisierung sowie die Passivierung des Sensors ist besonders einfach durchzuführen. Schließlich läßt sich infolge der unmittelbaren Zugänglichkeit des Sensors dieser leicht in engen Kontakt mit einem Körperteil führen, so daß damit die Messung der Körpertemperatur stark vereinfacht wird.

Die Auswahl der Behandlungsschritte für die Aufarbeitung der polykristallinen Siliziumschicht kann für die jeweils beabsichtigten Anwendungsgebiete ausgerichtet werden. Für die Temperaturmessung kommen beispielsweise die folgenden Kriterien in Betracht: Die Einstellung eines hinreichend großen Temperaturkoeffizienten, wie etwa 1 %/K, eine unkritische Einstellung, d.h., keine zu starke Abhängigkeit des Temperaturkoeffizienten von den Behandlungsparametern sowie eine Langlebensdauerqualität, d.h., die eingestellten Sensoreigenschaften dürfen sich nur in vernachlässigbarem Ausmaß mit der Zeit verändern, wobei Temperaturen von 0 bis 100°C oder höher zulässig sind.

Die Aufarbeitung des polykristallinen Siliziums erfolgt über einen oder mehrere Behandlungsschritte. Dabei wird in die polykristalline Figur zunächst eine Dotierung mit einem typischen Schichtwiderstand von etwa 500 $\Omega$ eingebracht. Anschließend findet alternativ eine Wärmebehandlung in einem Diffusionsofen statt, wobei bevorzugt die Behandlungstemperatur zwischen etwa 900°C und etwa 1100°C liegt, oder es erfolgt eine Bestrahlung mit einem Laser für eine Rekristallisation des polykristallinen Gefüges, wobei die Bestrahlungsbedingungen vom Lasertyp und dem Strahlungsaufbau abhängen. Andererseits kann auch die Bestrahlung mittels eines Elektronenstrahls erfolgen.

Die Einstellung vorgegebener Schichtwiderstände oder anderer physikalischer Parameter kann mittels einer Trimmapparatus erfolgen, bei welcher die Eigenschaften des polykristallinen Siliziums durch Laserbestrahlung geändert werden. Eine Kontrolle der Veränderung erfolgt über eine gleichzeitige Messung der elektrischen Eigenschaften und einer Regelelektronik. Hierzu bettet man vorzugsweise das Bauelement in ein System zur Erzeugung vorbestimmter Umgebungsbedingungen ein. Somit bearbeitet man die Polysiliziumschicht für eine optimale Sensierung des jeweils gewünschten Umweltparameters.

Die Auswahl der Behandlungsschritte erfolgt etwa nach den Kriterien einer Einstellung eines hinreichend großen Temperaturkoeffizienten (z.B. 1 %/K), einer unkritischen Einstellung, d.h., es soll keine zu starke Abhängigkeit des Temperaturkoeffizienten von den Behandlungsparemetern gegeben sein, und der Langlebensdauerqualität, gemäß welcher die eingestellten Sensoreigenschaften sich nur in vernachlässigbarem Ausmaß mit der Zeit verändern dürfen, wobei Temperaturen von 0 bis 100°C zulässig sind.

Vorzugsweise führt man die Kontaktierung über einen Ionenimplantationsprozeß mit Lackmaskierung durch. Die Öffnungen für die Vorder- und Rückseitenkontakte bringt man bevorzugt über einen Lithographieschritt mit anschließender Ätzung ein.

Die Metallisierung führt man durch beiderseitiges Bedampfen mit einer etwa 1,5 μm dicken Aluminiumschicht und einen Legierschritt durch. Die Trennung der einzelner Sensoren voneinander kann durch Ritzen und Brechen, bzw. Sägen entlang der Ritz- bzw. Sägebahnen erfolgen.

Eine entsprechende Ausführungsform ist selbstverständlich bei Anwendung konventioneller Verfahren mit monokristallinem Silizium durch eine PN-Übergang isolierte Sensorfigur möglich, die somit in den Rahmen der vorliegenden Erfindung fällt.

Das bevorzugte Einsatzgebiet für den erfindungsgemäßen Sensor liegt gemäß Anspruch 14 auf dem Gebiet der Temperaturmessung, wobei im besonderen eine Eignung für die Temperaturmessung des menschlichen oder tierischen Körpers, sowie der Messung von Warmwassertemperaturen gegeben ist. Daneben bestehen jedoch auch gemäß Anspruch 15 Einsatzmöglichkeiten für die Messung anderer physikalischer Größen, wie Druck, Strömung, Magnetfeld und Lichteinstrahlung, da alle diese Größen die elektrischen Eigenschaften von Silizium verändern. Für alle Einsatzmöglichkeiten zeichnet sich der erfindungsgemäße Sensor durch hohe Eichkonstanz und einen robusten Aufbau aus. Die einzelnen Sensoren können sich jedoch durch die art der Bearbeitung, insbesondere der oben aufgeführten Bearbeitungsprozesse, unterscheiden.

Eine Passivierung kann durchgeführt werden, etwa durch die Bedeckung des Sensors mit einer Quarz- oder Siliziumschicht, das Bedecken mit einem Schutzlack durch Tauchlackierung und/oder durch Aufsprühen mit einem Schutzlack.

Polykristallines Silizium hat die Eigenschaft, daß sich seine kristallographische Struktur nur bei sehr hohen Temperaturen (z.B. > 500° C) ändern kann, d.h., die einmal eingestellte Kristallstruktur bleibt bei niedrigen Temperaturen praktisch unverändert. Damit ist Silizium prinzipell zur Herstellung von Sensoren hoher Lebensdauer und großer Eichgenauigkeit geeignet.

Im Gegensatz zu monokristallinem Silizium können wichtige Materialeigenschaften wie Widerstand, Temperaturkoeffizient, durch entsprechende Verfahrensschritte in einem weiten Bereich kontinuierlich verändert werden. In Verbindung mit einer präzisen Einstelltechnik, wonach man das Bauelement in ein System zur Erzeugung vorbestimmter Umgebungsbedingungen einbettet, können vorgegebene physikalische Parameter mit hoher Genauigkeit erreicht werden.

Der planare Aufbau von Sensor und Metallisierung auf einem ebenen Substrat ermöglicht eine bei Verwendung von monokristallinem Silizium nur schwer realisierte Bauform, so daß ein leichter physischer Zugang zum Sensor, wie etwa durch Anpressen des Sensors an Körperstellen bei der Temperaturmessung, ermöglicht wird. Sie ermöglicht eine minimale Wärmekapazität des Sensors, die entscheidend ist für eine kurze Meßdauer. Der zuverlässige und robuste Aufbau gewährleistet eine geringe Empfindlichkeit gegenüber äußeren Beanspruchungen.

Wie bereits angedeutet, liegt ein besonderer Anwendungsbereich des erfindungsgemäßen Sensors auf dem Gebiet der elektronischen Messung der menschlichen und tierischen Körpertemperatur.

An elektronische Körpertemperatur-Meßgeräte werden aus Sicherheitsgründen besonders hohe Anforderungen bezüglich der Meßgenauigkeit und Eichkonstanz gestellt. Diesen Forderungen entsprechen die heute bekannten elektronischen Meßfühler nur ungenügend. So ergeben Thermoelemente ein zu kleines Meßsignal und damit eine unzureichende Meßgenauigkeit. NTC-Widerstände besitzen eine hohe Fertigungsstreuung sowie starke Alterungseffekte, wobei sich die Sensoreichung über die Zeit verändern kann. Schließlich besitzen Siliziumtemperatursensoren nach dem spreading-resistance-Prinzip ebenfalls hohe Fertigungsstreuungen sowie einen vergleichsweise voluminösen Aufbau, womit zwingend eine hohe Wärmekapazität und damit eine lange Reaktions- d.h. Meßzeit verbunden ist.

Demgegenüber besitzt der erfindungsgemäße Sensor eine geringe Wärmekapazität und damit eine kurze Meßzeit. Infolge der Verwendung von Silizium als Sensormaterial ergibt sich eine hohe Lebensdauerqualität und Eichkonstanz. Infolge der erwähnten präzisen Einstelltechnik ergeben sich geringe Fertigungstoleranzen und dementsprechend eine hohe Meßgenauigkeit. Die planare Metallisierung ermöglicht einen robusten und gegenüber äußeren Einwirkungen weitgehend unempfindlichen Aufbau. Eine Passivierung des Sensors läßt sich in einer besonders einfachen Weise durchführen. Schließlich gestattet der geringe Flächenbedarf des erfindungsgemäßen Sensors eine äußerst kostengünstige Herstellung.

Weitere Vorteile, Einzelheiten und erfindungswesentliche Merkmale ergeben sich aus der nachfolgenden Beschreibung zweier Ausführungsformen der Erfindung unter Bezugnahme auf die beigefügten Zeichnungen. Dabei zeigt im einzelnen:

Fig. 1 die Draufsicht auf einen geometrisch vorbestimmten dotierten Bereich aus polykristallinem Silizium, der hier als Vierpol-Sensor die Form einer van-der-Pauw-Figur besitzt,

Fig. 2 eine Draufsicht auf diese Ausführungsform des erfindungsgemäßen Sensors,

Fig. 3 die Draufsicht auf eine andere bevorzugte Ausführungsform des Sensors in schematischer Darstellung und

Fig. 4 einen Längsschnitt durch den Sensor gemäß Fig. 3.

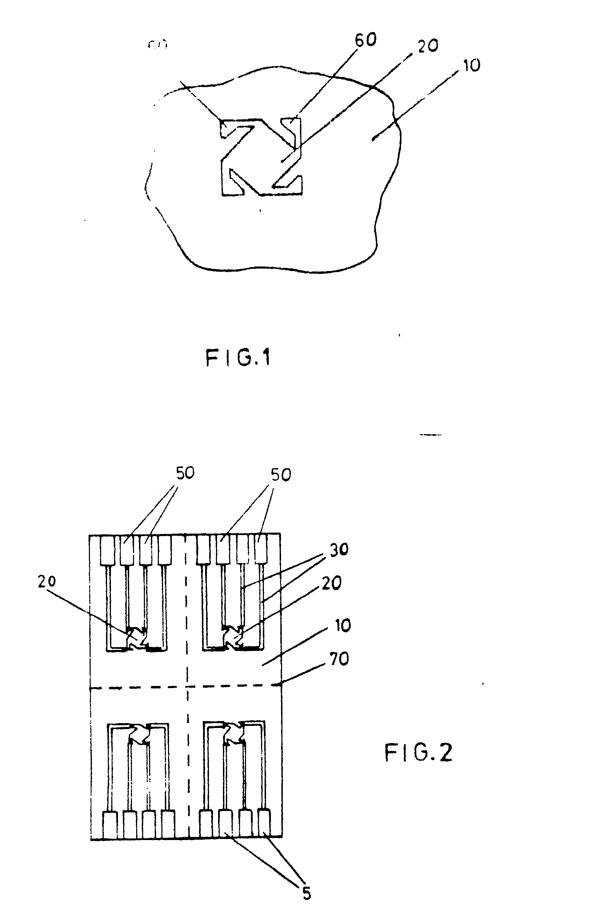

Das Substrat 10 besitzt eine ebene Oberflächenstruktur. Das Aufbringen der polykristallinen Siliziumschicht 20 erfolgt über das chemical-vapor-deposition-Verfahren, Aufdampfen oder Aufsputtern, in einer Schichtdicke von beispielsweise 0,5 µm. Mit Hilfe lithographischer Verfahren wird etwa eine van-der-Pauw-Figur erzeugt, wie dies in Fig. 1 dargestellt ist. Es ist jedoch an dieser Stelle besonders zu betonen, daß es sich hierbei nicht zwingend um eine van-der-Pauw-Figur handeln muß, sondern daß auch andere geometrisch vorbestimmte Bereiche ausgebildet werden können. Die zunächst ganzflächig aufgebrachte Schicht 20 bleibt nur im Bereich dieser Figuren erhalten, während die dazwischenliegenden Siliziumgebiete weggeätzt werden. Anschließend werden über einen Lithographie- und einen Dotierprozeß die Kontaktgebiete 60 der Widerstands- oder van-der-Pauw-Figur stark vordotiert (Schichtwiderstand $\leqslant 30\,\Omega$).

Die aus polykristallinem Silizium bestehende Widerstandsfigur 20 wird dann einem oder mehreren Behandlungsschritten unterworfen, wobei zunächst eine Dotierung (typischer Schichtwiderstand $\geqslant 500\,\Omega$) und eine anschließende Temperaturbehandlung in einem Diffusionsofen durchgeführt wird. Die typische Behandlungstemperatur liegt bei 900 bis 1100° C. Alternativ hierzu wird für eine Rekristallisation des polykristallinen Gefüges eine Bestrahlung mit einem Laser oder einem Elektronenstrahl durchgeführt. Es werden vorgegebene Schichtwiderstände oder andere physikalische Parameter eingestellt, wobei die Eigenschaften des polykristallinen Siliziums durch die Laserbestrahlung geändert werden.

Das Substrat 10 mit der darauf befindlichen Meßfigur 20 wird ganzflächig mit einer Metallschicht überzogen, die beispielsweise aus Aluminium bestehen kann und eine Dicke von etwa 1 µm besitzt. Über einen sich anschliessenden Lithographie- und Ätzprozeß werden Leiterbahnen 30 definiert. Die Leiterbahnen 30 stehen mit den Meßfiguren in Verbindung und sind, soweit es sich bei den Figuren um van-der-Pauw-Figuren handelt, an die Kontaktgebiete 60 angeschlossen.

Die am Außenrand des Sensors liegenden Enden 50 der Leiterbahnen 30 können eine galvanische Verdickung tragen, so daß der Sensor durch Einstecken in einen Normstecker kontaktiert werden kann. Es kann auch eine Kontaktleiste an die Leiterbahnen 30 angelötet sein. Schließlich kann die Kontaktierung auch über ein konventionelles Golddrahtbonden an die Leiterbahnen 30 erfolgen.

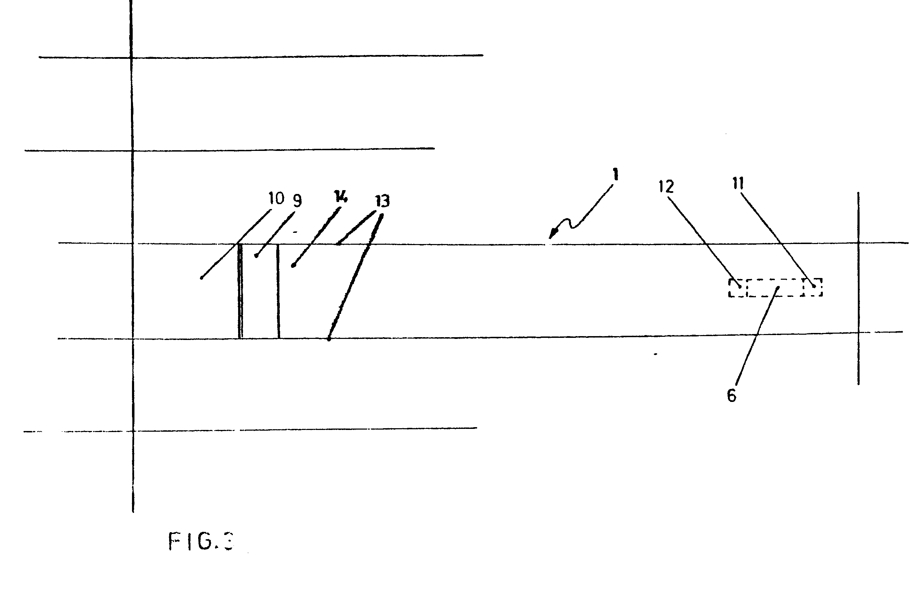

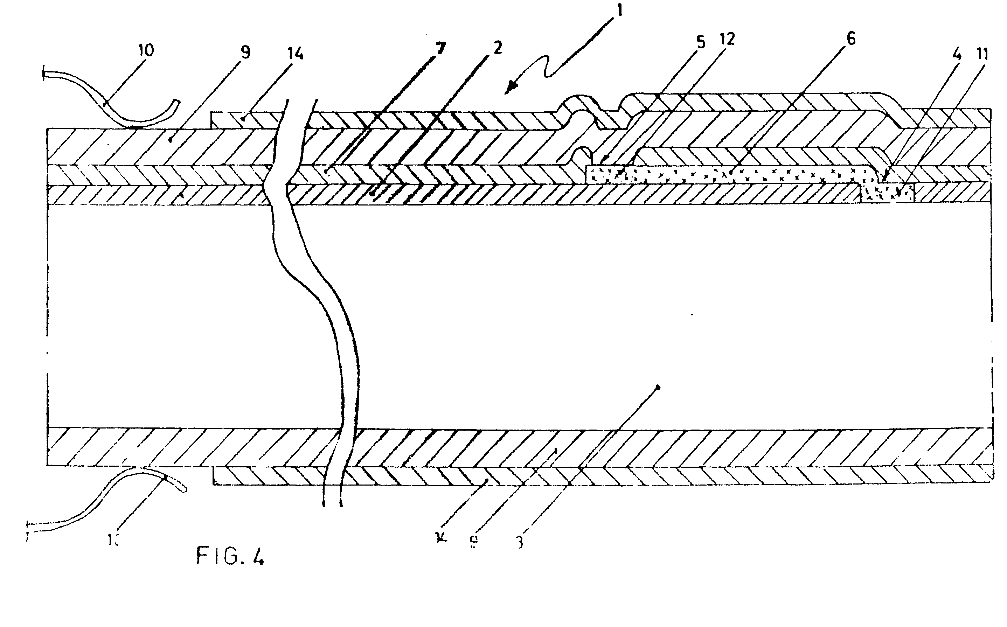

Eine weitere Ausführungsform des erfindungsgemäßen Sensors soll nachfolgend unter Bezugnahme auf die Figuren 3 und 4 näher erläutert werden.

Der in den Fig. 3 und 4 dargestellte Sensor 1 umfaßt ein niederohmiges Trägersubstrat 3, das aus Silizium besteht, mit einem spezifischen Widerstand von z.B. < 1 Ohm cm. Dieses Substrat 3 wird z.B. thermisch oxydiert, bis eine erste $SiO_2$-Schicht 2 als Substrat für die Sensormeßfigur 6 mit einer Schichtdicke von etwa 1 µm aufgewachsen ist. Anschließend wird über einen Standard-Lithographieschritt eine Öffnung 4 für den Rückseitenkontakt 11 in die erste $SiO_2$-Schicht 2 geätzt.

Bei diesem Ätzschritt wird auch die $SiO_2$-Schicht auf der Scheibenrückseite entfernt. Anschließend wird die Vorderseite des Substrats 3 mit einer z.B. 0,5 µm dicken Schicht aus polykristallinem Silizium bedeckt. Als nächster Schritt erfolgt die Definition der Sensormeßfigur 6 sowie eine Kontaktdotierung der Anschlußflächen für den Vorderseitenkontakt 12 sowie den Rückseitenkontakt 11.

Es ist hierbei zu beachten, dan die späteren Verbindungen Aluminium-Polysilizium und Polysilizium/Substrat jeweils sperrfreie Kontakte ergeben. Die Kontaktierung kann über einen Ionenimplantationsprozeß mit Lackmaskierung erfolgen.

Anschließend wird die Polysiliziumschicht so bearbeitet, daß sie für die Sensierung des gewünschten Umweltparameters optimal geeignet ist.

Im Anschluß hieran bedeckt man die Vorderseite des Substrats 2 pyrolitisch mit einer etwa 1 µm dicken zweiten $SiO_2$-Schicht 7, die die Sensormeßfigur 6 ebenfalls überdeckt. Über einen Lithographieschritt mit anschließendem Ätzen erzeugt man innerhalb der zweiten $SiO_2$-Schicht 7 eine Öffnung 5 für den Vorderseitenkontakt 12.

Die Metallisierung des Sensors erfolgt einfach durch ein beiderseitiges Bedampfen der zweiten $SiO_2$-Schicht 7 auf der Vorderseite des Sensors 1 einerseits und des Trägersubstrats 3 auf dessen Rückseite andererseits, mit einer etwa 1,5 µm dicken Aluminium-Schicht 9 und einem Legierschritt.

Die Trennung der einzelnen Sensoren voneinander wird durch Ritzen und Brechen bzw. Sägen entlang der Ritz- bzw. Sägebbahnen 13 vorgenommen.

Die Kontaktierung des Sensors 1 erfolgt über zwei Klemmkontakte 10 auf den metallisierten Vorder- und Rückseiten 9 des Sensors 1, wobei jedoch auch andere Kontaktierung, wie etwa durch Löten, ohne weiteres möglich sind.

Der Sensor 1 kann schließlich, wie dies in Fig. 4 durch eine Schicht 14 angezeigt ist, mit einem Passivierungsüberzug versehen sein, der außerhalb des Eingriffsbereiches der Klemmkontakte 10 auf die Metallisierung 9 des Sensors 1 aufgebracht ist. Die Passivierung kann aus einer Quarz- oder Siliziumschicht bestehen, oder auch durch einen Schutzlack gebildet werden, der durch Tauchlackierung oder Aufsprühen aufgebracht ist.

Eine besondere Ausführungsform umfaßt die Herstellung und Anwendung von Strömungssensoren nach dem Anemometer-Prinzip, wobei sich zwischen zwei oder mehreren Sensoren der beschriebenen Art eine Wärmequelle, z.B. ein beheizter Widerstand, befindet. Je nach Strömungsrichtung wird die Wärme dieser Quelle bevorzugt auf einen oder mehrere dieser Sensoren übertragen.

Mit den Sensoren der beschriebenen Art läßt sich eine flächenhafte Verteilung von Umweltparametern, wie z.B. eine flächenhafte Temperaturverteilung, aufnehmen.

**Patentansprüche**

1. Sensor zur Messung physikalischer Größen, die die elektrischen Eigenschaften von Silizium verändern, wobei sich auf einem schlechtleitenden, ebenen Substrat ein geometrisch vorbestimmter Bereich aus polykristallinem Halbleitermaterial befindet, der mit nach außen abgeführten Leiterbahnen in Kontakt steht, dadurch gekennzeichnet, daß sich das Substrat (2) als Schicht auf einem niederohmigen Trägersubstrat (3) befindet, über welches ein Rückseitenkontakt (11) durch eine Öffnung (4) in der Substratschicht (2) hergestellt ist, während auf der aus $SiO_2$ bestehenden Substratschicht (2) eine zweite $SiO_2$-Schicht (7)

aufgebracht ist, die eine Sensormeßfigur (6, 20) überdeckt und eine Öffnung (5) für einen Vorderseitenkontakt (12) aufweist und die Vorderseite ganzflächig oder teilweise metallisiert ist, wobei eine elektrische Verbindung der Metallisierung mit dem Vorderseitenkontakt (12) über eine Öffnung (5) in der Meßfigur (6, 20) überziehenden zweiten Schicht (7) hergestellt ist, während die Rückseite des Trägersubstrats (3) metallisiert ist.

2. Sensor nach Anspruch 1, dadurch gekennzeichnet, daß die Schichtdicke des polykristallinen Siliziums etwa 0,5 μm beträgt.

3. Sensor nach einem der vorangehenden Ansprüche, dadurch gekennzeichnet, daß die Enden der nach außen abgeführten Leiterbahnen (30) mit einer galvanischen Verdickung (50) zur Anpassung an einen Normstecker versehen sind.

4. Sensor nach einem der Ansprüche 1 bis 3, dadurch gekennzeichnet, daß an die Enden der Leiterbahnen (30) Kontakte angelötet, angeschweißt, angeklebt oder anders befestigt sind.

5. Sensor nach einem der vorangehenden Ansprüche, dadurch gekennzeichnet, daß der geometrisch vorbestimmte dotierte Bereich (20) einen Vierpol-Sensor etwa in der Form einer van-der-Pauw-Figur darstellt.

6. Sensor nach einem der vorangehenden Ansprüche, dadurch gekennzeichnet, daß die Meßfigur (6) zweipolig ausgebildet ist.

7. Sensor nach einem der vorangehenden Ansprüche, dadurch gekennzeichnet, daß die Metallisierung (9) aus einer etwa 1,5 μm dicken Aluminiumschicht besteht.

8. Sensor nach einem der vorangehenden Ansprüche, dadurch gekennzeichnet, daß er als passivierende Abdeckung (14) eine Quarz-, Siliziumnitrid- oder Lackschicht trägt.

9. Verfahren zur Herstellung des Sensors nach den Ansprüchen 1 bis 8, dadurch gekennzeichnet, daß man ein niederohmiges Siliziumsubstrat thermisch oxydiert, bis sich eine erste $SiO_2$-Schicht von etwa 1 μm Dicke aufgebaut hat, in diese erste $SiO_2$-Schicht eine Öffnung für den Rückseitenkontakt der Sensormeßfigur einbringt und auf dieser Schicht die Sensormeßfigur aus polykristallinem Silizium definiert, sowie eine Kontaktdotierung der Anschlußflächen für den Vorder- und Rückseitenkontakt vornimmt, worauf man die Vorderseite pyrolytisch mit einer zweiten $SiO_2$-Schicht von etwa 1 μm Dicke bedeckt und hierin eine Öffnung für den Vorderseitenkontakt einbringt, während man anschließend eine beiderseitige Metallisierung durchführt.

10. Verfahren nach Anspruch 9, dadurch gekennzeichnet, daß man die polykristalline Siliziumschicht durch das chemical-vapor-deposition-Verfahren, durch Aufdampfen oder Aufsputtern aufbringt und anschließend mit Hilfe von lithographischen Verfahren die Widerstands- oder van-der-Pauw-Figuren ausbildet.

11. Verfahren nach Anspruch 9, dadurch gekennzeichnet, daß man im Anschluß an die Dotierung eine Wärmebehandlung oder alternativ zur Rekristallisation des polykristallinen Gefüges eine Bestrahlung mit einem Laser oder einem Elektronenstrahl vornimmt.

12. Verfahren nach einem der Ansprüche 9 bis 11, dadurch gekennzeichnet, daß man die Leiterbahnen definiert, indem man zunächst eine ganzflächige Metallschicht aufbringt und die Bahnen durch einen nachfolgenden Lithographie- und Ätzprozeß ausbildet.

13. Verfahren nach Anspruch 9, dadurch gekennzeichnet, daß man die Dotierung über einen Ionenimplantationsprozeß mit Lackmaskierung durchführt.

14. Verwendung des Sensors nach den Ansprüchen 1 bis 8 zur Temperaturmessung.

15. Verwendung des Sensors nach den Ansprüchen 1 bis 8 zur Druck-, Strömungs-, Magnetfeld und/oder Lichteinstrahlungsmessung, sowie weiterer Messungen von physikalischen Umgebungsbedingungen, welche den Schichtwiderstand von Silizium verändern.

## Claims

1. Sensor device for the measurement of physical quantities, modifying the electrical properties of silicon, where on a poorly conducting plane substrate there is provided a geometrically predetermined area of a polycrystalline semi-conducting material, said area being in contact with conductors leading to the exterior, characterized by said substrate (2) being provided as a layer on a low-resistance carrier substrate (3) by which a back face contact (11) is provided through an opening (4) in said substrate layer (2), while on said layer (2) consisting of $SiO_2$ there is provided a second $SiO_2$ layer (7) covering a sensor measuring figure (6, 20) and having an opening (5) for a front face contact (12) said front face being metallized in total or in part, and an electrical connection being provided between metallization and said front face contact (12) through an opening (5) in said second layer (7) covering said measuring figure (6, 20), the back side surface of said carrier substrate (3) being metallized.

2. Sensor device according to claim 1, characterized by the thickness of said polycrystalline silicon being about 0.5 μm.

3. Sensor device according to one of the preceeding claims, characterized by the end of said conductors (30) leading to the ouside being provided with galvanic enlargements (50) for adaptation to a standard plug.

4. Sensor device according to claims 1 to 3, characterized by the ends of said conductors (50) being provided with contacts, which are solded, welded, glued or otherwise fixed thereto.

5. Sensor device according to one of the preceeding claims, characterized by said geometrically predetermined doped area (20) being a four-pole-sensor having about the structure of a van-der-Pauw figure.

6. Sensor device according to one of the preceeding claims, characterized by said measuring figure (6) having a two-pole structure.

7. Sensor device according to one of the preceeding claims, characterized by said metallization (9) consisting of an aluminum layer having a thickness of 1.5 µm.

8. Sensor device according to one of the preceeding claims, characterized by said sensor being provided with a passivating layer (14) of quartz, silicon nitride or lacquer.

9. Process for the manufacture of the sensor device according to claims 1 to 8, characterized by thermically oxydizing a poorly conducting silicon substrate until there has formed a first $SiO_2$ layer, having a thickness of about 1 µm, forming an opening in said first $SiO_2$ layer for the back face contact of said sensor measuring figure and defining on said layer said sensor measuring figure of polycrystalline silicon, and providing a contact doping for the terminal areas of the front face and back face contacts, whereupon the front face is pyrolytically covered with a second $SiO_2$ layer having a thickness of about 1 µm and forming an opening therein for said front face contact, and subsequently providing the metallization on both faces.

10. Process according to claim 1, characterized by preparing the silicon layer by a chemical vapour deposition process, vaporization or sputtering and subsequently forming the resistance or van-der-Pauw figures thorugh lithographic processes.

11. Process according to claim 9, characterized by effecting following the doping, a heat treatment or alternatively for a recristallisation of the polycrystalline structure a radiation with a laser or an electron-beam.

12. Process according to one of claims 9 to 11, characterized by defining the conductors by deposing a metal layer over the total surface and forming the conductors by a subsequent lithographie and etching process.

13. Process according to claim 9, characterized by effecting the doping by an ion implentation process with lacquer masking.

14. Application of the sensor device according to claims 1 to 8 for temperature measurement.

15. Application of the sensor device according to claims 1 to 8 for the measurement of pressure, current, magnetic field and/or light irradiation as well as further measurements of physical ambient conditions modifying the layer resistance of silicon.

## Revendications

1. Capteur pour la mesure de grandeurs physiques qui modifient les propriétés électriques du silicium, dans lequel se trouve, sur un substrat plan et mauvais conducteur, un domaine géométriquement défini au préalable en un matériau semi-conducteur polycristallin, qui se trouve en contact avec des bandes conductrices sorties vers l'extérieur, caractérisé en ce que le substrat (2) se présente sous la forme d'une couche sur un substrat-support (3) à faible résistance, sur lequel est ménagé le contact face arrière (11) à travers une ouverture (4) pratiquée dans la couche de substrat (2), tandis que sur la couche de substrat (2), constitué de $SiO_2$, est déposée une deuxième couche (7) de $SiO_2$, qui recouvre la figure de mesure (6, 20) du capteur et qui présente une ouverture (5) pour le contact côté avant (12), le côté avant étant totalement ou partiellement métallisé, une connexion électrique de la couche de métallisation avec le contact côté avant (12) étant aménagée par l'intermédiaire d'une ouverture (5) pratiquée dans la deuxième couche (7) recouvrant la figure de mesure (6, 20) tandis que le côté arrière du substrat-support (3) est métallisé.

2. Capteur conforme à la revendication 1, caractérisé en ce que l'épaisseur de la couche de silicium polycristallin est d'environ 0,5 µm.

3. Capteur conforme à l'une quelconque des revendications précédentes, caractérisé en ce que les extrémités des bandes conductrices (30) sorties vers l'extérieur sont munies d'un épaississement galvanique (50) pour adaptation à une fiche normalisée.

4. Capteur conforme à l'une quelconque des revendications 1 à 3, caractérisé en ce que des contacts sont soudés, brasés, collés, ou fixés d'une autre manière, aux extrémités des bandes conductrices (30).

5. Capteur conforme à l'une quelconque des revendications précédentes, caractérisé en ce que le domaine (20) dopé, géométriquement défini au préalable, rreprésente un capteur quadripolaire ayant à peu près la forme d'une figure de Van-der-Pauw.

6. Capteur conforme à l'une quelconque des revendications précédentes, caractérisé en ce que la figure de mesure (6) a une structure bipolaire.

7. Capteur conforme à l'une quelconque des revendications précédentes, caractérisé en ce que la couche de métallisation (9) est constituée d'une couche d'aluminium épaisse d'environ 1,5 µm.

8. Capteur conforme à l'une quelconque des revendications précédentes, caractérisé en ce qu'il porte une couche de quartz, de nitrure de silicium, ou de laque, en tant que revêtement passivant.

9. Procédé de fabrication d'un capteur conforme aux revendications 1 à 8, caractérisé en ce que l'on oxyde thermiquement un substrat en silicium, à faible résistance, jusqu'à ce qu'il se soit formé une première couche de $SiO_2$, d'une épaisseur d'environ 1 µm, on forme dans cette première couche de $SiO_2$ une ouverture pour le contact côté arrière de la figure de mesure du capteur, et on définit sur cette couche la figure de mesure du capteur en silicium polycristallin, et l'on effectue également un dopage par contact des surfaces de raccords des côté avant et côté arrière, à la suite de quoi on recouvre par voie pyrolytique le côté avant d'une deuxième couche de SiO₂ d'une épaisseur d'environ 1 μm et l'on y forme une ouverture pour le contact côté avant, et l'on effectue ensuite une métallisation des deux côtés.

10. Procédé conforme à la revendication 9, caractérisé en ce que l'on dépose la couche de silicium polycristallin par le procédé de dépôt chimique en phase vapeur, évaporation ou pulvérisation, et que l'on forme ensuite, à l'aide d'un procédé lithographique, les figures de résistance ou de Van-der-Pauw.

11. Procédé conforme à la revendication 9, caractérisé en ce que l'on effectue, à la suite du dopage, un traitement thermique ou bien, pour la recristallisation de la structure polycristalline, une irradiation par un laser ou un faisceau d'électrons.

12. Procédé conforme à l'une des revendications 9 à 11, caractérisé en ce que l'on définit les bandes conductrices en déposant d'abord sur toute la surface une couche de métal, et en formant ultérieurement les bandes grâce à un procédé de lithographie et gravure.

13. Procédé conforme à la revendication 9, caractérisé en ce que l'on réalise le dopage par un procédé d'implantation d'ions avec masquage par laque.

14. Utilisation du capteur conforme aux revendications 1 à 8 pour la mesure de température.

15. Utilisation du capteur conforme aux revendications 1 à 8 pour la mesure de pression, de courant, de champ magnétique et/ou d'irradiation lumineuse, ainsi que pour d'autres mesures de grandeurs physiques ambiantes qui modifient la résistance à couche du silicium.

FIG.1

FIG.2

FIG. 3

FIG. 4

0 060 427